# EUROPEAN PATENT SPECIFICATION

(11) **EP 4 403 789 B1**
(45) Date of publication and mention of the grant of the patent: **03.09.2025**
(21) Application number: 23219008.2
(22) Date of filing: 21.12.2023
(51) Int. Cl.: F16D 3/64, F16D 3/68

(54) **POWER ASSEMBLY AND AUTOMOBILE**
ANTRIEBSANORDNUNG UND KRAFTFAHRZEUG
ENSEMBLE D'ALIMENTATION ET AUTOMOBILE

(30) Priority: 12.01.2023 CN 202310072291
(43) Date of publication of application: 24.07.2024
(73) Proprietor: Huawei Digital Power Technologies Co., Ltd., Shenzhen, Guangdong 518043 (CN)
(72) Inventor: HONG, Jian, Shenzhen, 518043 (CN); MA, Senlin, Shenzhen, 518043 (CN); CHEN, Jian, Shenzhen, 518043 (CN)
(74) Representative: Isarpatent

(56) References cited:
- WO-A1-2006/118533
- CN-U- 213 990 394
- KR-A- 20170 110 464
- US-A1- 2016 201 761

## Description

### TECHNICAL FIELD

The present disclosure generally relates to the field of vehicle technologies, and the invention in particular relates to a powertrain and an automobile.

### BACKGROUND

With the vigorous development of the automobile industry, a powertrain as a core component of a power system develops rapidly. An output shaft of a motor of the powertrain is fastened by using a fastener. In such a fastening manner, a quantity of parts and an assembly process of the powertrain increase, and therefore assembly complexity of the powertrain and product costs are high. Prior art can be considered KR 2017 0110464 A.

### SUMMARY

The object of the present invention is to resolve the foregoing problemsby a powertrain, including a motor, a reducer, and an elastic component. The reducer includes an input shaft, the motor includes an output shaft, and the input shaft is coaxially coupled to the output shaft. In embodiments of this application, the elastic component is disposed between the output shaft and the input shaft, allowing the motor to have an axial movement during running. Compared with a manner in which inner and outer rings of a bearing of an output shaft of a motor are completely fastened, this reduces an assembly requirement of the motor and a design requirement of a housing of the powertrain.

Therefore, the following technical solutions are used in embodiments of this application. In particular, the invention is defined by the attached independent claims and further advantageous embodiments and improvements of the invention are listed in the dependent claims.

According to a first aspect, this application provides a powertrain. The powertrain includes a motor, a reducer, and an elastic component. The reducer includes an input shaft, the motor includes an output shaft, the input shaft is coaxially coupled to the output shaft, a coupling end of the input shaft includes a first limiting platform and a first coupling surface, and a coupling end of the output shaft includes a second limiting platform and a second coupling surface. The first coupling surface and the second coupling surface are disposed opposite to each other along a radial direction of the input shaft, and the first coupling surface is in contact with the second coupling surface, so that the output shaft is in transmission connection with the input shaft. The first limiting platform and the second limiting platform are disposed opposite to each other along an axial direction of the input shaft. The elastic component is fastened between the first limiting platform and the second limiting platform.

In an implementation, two ends of the elastic component respectively abut against the first limiting platform and the second limiting platform, so that the elastic component is in a compressed state. The compressed state of the elastic component includes a first compressed state and a second compressed state, the input shaft and the output shaft of the motor move relative to each other along the axial direction of the input shaft, so that the
elastic component is switched from the first compressed state to the second compressed state, and a length of the elastic component in the second compressed state is greater than or less than a length of the elastic component in the first compressed state.

In another implementation, one of the coupling end of the input shaft and the coupling end of the output shaft includes a protruding portion, the other of the coupling end of the input shaft and the coupling end of the output shaft includes a groove portion, and the protruding portion is embedded in the groove portion along the axial direction of the input shaft or an axial direction of the output shaft to form a transmission connection. Along the axial direction of the input shaft or the axial direction of the output shaft, an end surface of the protruding portion is disposed opposite to a bottom surface of the groove portion, a side surface of the protruding portion forms one of the first coupling surface and the second coupling surface, and a side surface of the groove portion forms the other of the first coupling surface and the second coupling surface.

In another implementation, along the radial direction of the input shaft or a radial direction of the output shaft, a radial size of the protruding portion is less than a radial size of the first limiting platform and a radial size of the second limiting platform, an outer diameter of the groove portion is less than the radial size of the first limiting platform and the radial size of the second limiting platform, and the radial size of the protruding portion is less than or equal to an inner diameter of the groove portion.

In another implementation, an interstice between the end surface of the protruding portion and the bottom surface of the groove portion is greater than a length of the elastic component in the compressed state, and the side surface of the protruding portion is in clearance fit with the side surface of the groove portion.

In another implementation, the coupling end of the input shaft is connected and coupled to the coupling end of the output shaft by using splines, the side surface of the protruding portion includes an external spline, and the side surface of the groove portion includes an internal spline.

In another implementation, the elastic component is a waveform spring, and the waveform spring is sleeved on the coupling end of the input shaft and the coupling end of the output shaft. Along the radial direction of the input shaft or a radial direction of the output shaft, an inner diameter of the waveform spring is greater than a radial size of the protruding portion and an outer diameter of the groove portion.

In another implementation, along the radial direction of the input shaft or the radial direction of the output shaft, an outer diameter of the waveform spring is less than a radial size of the first limiting platform and a radial size of the second limiting platform.

In another implementation, the first limiting platform includes a first fastening component, the first fastening component is configured to fasten one end of the elastic component, and the second limiting platform is configured to fasten the other end of the elastic component; or the second limiting platform includes a second fastening component, the first limiting platform is configured to fasten one end of the elastic component, and the second fastening component is configured to fasten the other end of the elastic component.

In another implementation, along the radial direction of the input shaft, the elastic component is disposed in an interstice with the first coupling surface or the second coupling surface.

In another implementation, the coupling end of the input shaft includes a first limiting boss, and the first limiting boss is configured to limit displacement of the elastic component along the radial direction of the input shaft. Along the radial direction of the input shaft, a radial size of the first limiting boss is less than the radial size of the first limiting platform. Along the axial direction of the input shaft, an end surface of the first limiting boss faces the second limiting platform, and a distance between the end surface of the first limiting boss and the second limiting platform is less than a distance between the first limiting platform and the second limiting platform.

In another implementation, the elastic component is the waveform spring, and one end of the waveform spring is sleeved on a side surface of the first limiting boss. Along the radial direction of the input shaft, an inner diameter of the elastic component is greater than or equal to the radial size of the first limiting boss. Along the axial direction of the input shaft, the distance between the end surface of the first limiting boss and the second limiting platform is less than the length of the elastic component in the compressed state.

In another implementation, the coupling end of the output shaft includes a second limiting boss, and the second limiting boss is configured to limit displacement of the elastic component along the radial direction of the output shaft. Along the radial direction of the output shaft, a radial size of the second limiting boss is less than the radial size of the second limiting platform. Along the axial direction of the output shaft, an end surface of the second limiting boss faces the first limiting platform, and a distance between the end surface of the second limiting boss and the first limiting platform is less than the distance between the first limiting platform and the second limiting platform.

In another implementation, the elastic component is the waveform spring, and the other end of the waveform spring is sleeved on a side surface of the second limiting boss. Along the radial direction of the input shaft, the inner diameter of the elastic component is greater than or equal to the radial size of the second limiting boss. Along the axial direction of the input shaft, the distance between the end surface of the second limiting boss and the first limiting platform is less than the length of the elastic component in the compressed state.

According to a second aspect, this application provides an automobile, including a wheel and the powertrain. The powertrain is configured to drive the wheel of the automobile to rotate.

### BRIEF DESCRIPTION OF DRAWINGS

The following briefly describes accompanying drawings used in descriptions of embodiments or a conventional technology.
FIG. 1 is a schematic diagram of a scenario of an automobile according to an embodiment of this application;
FIG. 2 is a schematic sectional view of a structure of a first powertrain according to an embodiment of this application;
FIG. 3 is a schematic diagram of a structure of an output shaft of a first powertrain according to an embodiment of this application;
FIG. 4 is a schematic diagram of a structure of an input shaft of a first powertrain according to an embodiment of this application;
FIG. 5a is an enlarged diagram of a structure of a coupling part between an output shaft and an input shaft of a first powertrain according to an embodiment of this application;
FIG. 5b is an enlarged diagram of a structure of a coupling part between an output shaft and an input shaft of a second powertrain according to an embodiment of this application;
FIG. 5c is an enlarged diagram of a structure of a coupling part between an output shaft and an input shaft of a third powertrain according to an embodiment of this application;
FIG. 5d is an enlarged diagram of a structure of a coupling part between an output shaft and an input shaft of a fourth powertrain according to an embodiment of this application;
FIG. 6 is a schematic diagram of force transfer of a first powertrain during normal operation according to an embodiment of this application;
FIG. 7 is a schematic diagram of force transfer when a first powertrain is subjected to an impact force in a direction away from a reducer according to an embodiment of this application; and
FIG. 8 is a schematic diagram of force transfer when a first powertrain is subjected to an impact force in a direction close to a reducer according to an embodiment of this application.

### DESCRIPTION OF EMBODIMENTS

The following describes technical solutions in embodiments of this application with reference to accompanying drawings in embodiments of this application.

In descriptions of this application, an orientation or a position relationship indicated by terms "center", "above", "below", "front", "behind", "left", "right", "vertical", "horizontal", "top", "bottom", "inside", "outside", or the like is based on an orientation or a position relationship shown in the accompanying drawings, and is merely intended for ease of describing this application and simplifying descriptions, but is not intended to indicate or imply that a described apparatus or element needs to have a specific orientation or needs to be constructed and operated in a specific orientation. Therefore, such terms shall not be understood as a limitation on this application.

In descriptions of this application, it should be noted that, unless otherwise clearly specified and limited, terms "mount", "link", and "connect" should be understood in a broad sense. For example, the term "connect" may indicate a fixed connection, or may indicate a detachable connection, or may indicate a contact connection or an integrated connection. A person of ordinary skill in the art may understand specific meanings of the foregoing terms in this application according to specific cases. In embodiments of this application, "contact" or "coupling" may indicate a direct contact between components, or may indicate a contact between components by using an adhesive or a thermally conductive adhesive, or may indicate a connection between components implemented by using a mechanical structure.

In descriptions of this specification, specific features, structures, materials, or characteristics may be combined in a proper manner in any one or more of embodiments or examples.

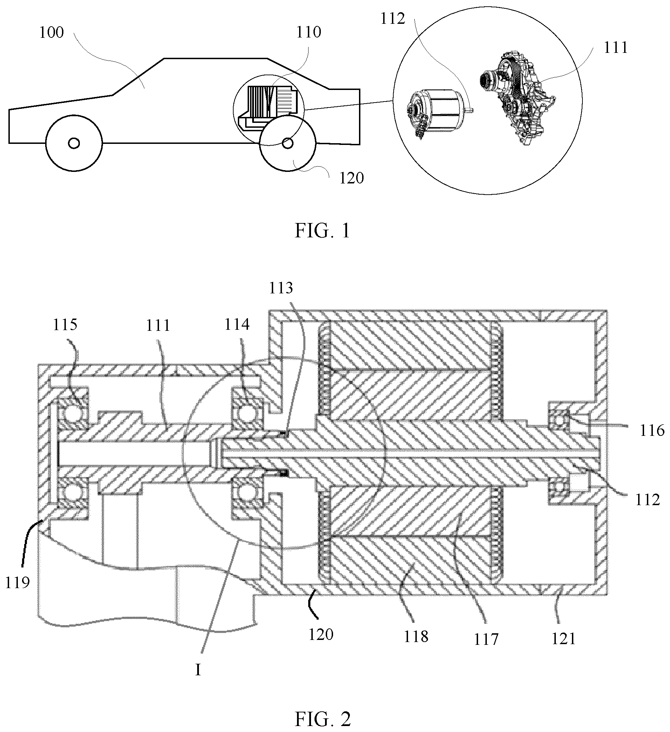

FIG. 1 is a schematic diagram of a structure of an automobile. As shown in FIG. 1, the automobile 100 includes a powertrain 110 and a wheel 120. The powertrain 110 includes a motor and a reducer. The motor includes an output shaft, and the reducer includes an input shaft. When the motor operates, power generated by the motor may be transferred to the input shaft of the reducer by using the output shaft of the motor, so that the power of the motor is transferred to the reducer. The reducer is coupled to a wheel shaft of the wheel 120 of the automobile 100. The reducer reduces power of the motor when rotating at a high speed to torque of the motor when rotating at a low speed, and transfers the power to the wheel shaft of the wheel 120 by using an output shaft of the reducer, to drive the wheel 120 and the automobile 100 to move. In embodiments of this application, the output shaft is the output shaft of the motor, and the input shaft is the input shaft of the reducer.

In a running process, when the automobile 100 encounters an obstacle such as a water pit or a stone, the output shaft of the motor collides with the input shaft of the reducer, causing problems such as wear, noise, and kinetic energy reduction between the output shaft and the input shaft.

In a conventional technology, to resolve a problem that the output shaft collides with the input shaft, an elastic component is disposed at a position of a shaft end that is of the output shaft and that is away from the input shaft. The elastic component provides a preload force for the motor, so that coaxiality requirements of the output shaft and the input shaft can be effectively ensured. However, in an existing solution, in response to axial impact on the automobile or the powertrain, the output shaft compresses the elastic component under an inertial force. When the inertial force of the output shaft is greater than a bearer limit of the elastic component, or a quantity of times of impact of the output shaft is greater than a fatigue limit of the elastic component, the elastic component is crushed and fails.

To resolve a defect of the existing solution, embodiments of this application provide a powertrain and an automobile. The powertrain in embodiments of this application includes a motor, a reducer, and an elastic component. The reducer includes an input shaft, and the motor includes an output shaft. The input shaft is coaxially coupled to the output shaft. A coupling end of the input shaft includes a first limiting platform and a first coupling surface, and a coupling end of the output shaft includes a second limiting platform and a second coupling surface. The first coupling surface and the second coupling surface are disposed opposite to each other along a radial direction of the input shaft, and the first coupling surface is in contact with the second coupling surface, so that the output shaft is in transmission connection with the input shaft. The first limiting platform and the second limiting platform are disposed opposite to each other along an axial direction of the input shaft. The elastic component is fastened between the first limiting platform and the second limiting platform.

The first coupling surface is in contact with the second coupling surface, so that the output shaft is in transmission connection with the input shaft, so that power of the motor is transferred to the reducer. The first limiting platform and the second limiting platform are disposed opposite to each other along the axial direction of the input shaft, and mounting space exists between the first limiting platform and the second limiting platform. The elastic component is disposed in the mounting space between the first limiting platform and the second limiting platform. The elastic component allows the motor to move axially in an operation process. Compared with a manner in which inner and outer rings of a bearing of a fixed motor are completely fastened, this reduces an assembly requirement of the motor and a design requirement of a housing.

In an embodiment, two ends of the elastic component respectively abut against the first limiting platform and the second limiting platform, so that the elastic component is in a compressed state. The compressed state of the elastic component includes a first compressed state and a second compressed state. The input shaft and the output shaft of the motor move relative to each other along the axial direction of the input shaft, so that the elastic component is switched from the first compressed state to the second compressed state. A length of the elastic component in the second compressed state is greater than or less than a length of the elastic component in the first compressed state.

The compressed state of the elastic component includes two compressed states. When the elastic component is in the first compressed state, the elastic component provides a preload force for the input shaft or the output shaft. In response to axial impact on the automobile or the powertrain, the output shaft compresses the elastic component due to inertia, so that the elastic component is switched from the first compressed state to the second compressed state. When the output shaft moves away from the input shaft, the length of the elastic component in the second compressed state is greater than the length of the elastic component in the first compressed state. When the output shaft moves close to the input shaft, the length of the elastic component in the second compressed state is less than the length of the elastic component in the first compressed state. The elastic component can adapt to different operation conditions by using the two compressed states of the elastic component.

In an embodiment, one of the coupling end of the input shaft and the coupling end of the output shaft includes a protruding portion, the other of the coupling end of the input shaft and the coupling end of the output shaft includes a groove portion, and the protruding portion is embedded in the groove portion along the axial direction of the input shaft or an axial direction of the output shaft to form a transmission connection. Along the axial direction of the input shaft or the axial direction of the output shaft, an end surface of the protruding portion is disposed opposite to a bottom surface of the groove portion. A side surface of the protruding portion forms one of the first coupling surface and the second coupling surface, and a side surface of the groove portion forms the other of the first coupling surface and the second coupling surface.

One of the coupling end of the input shaft and the coupling end of the output shaft includes the protruding portion, and the other includes the groove portion, where the protruding portion and the groove portion form a transmission connection. The transmission connection includes a connection by using a shaft key, for example, a flat key, a woodruff key, or a spline, and a connection by using a polygon shaft and a polygon hole, for example, a connection between a square shaft and a square hole. The protruding portion and the groove portion form the transmission connection, a connection manner is stable and reliable, and energy is transferred from the output shaft of the motor to the input shaft of the reducer.

In an embodiment, along the radial direction of the input shaft or a radial direction of the output shaft, a radial size of the protruding portion is less than a radial size of the first limiting platform and a radial size of the second limiting platform, and an outer diameter of the groove portion is less than the radial size of the first limiting platform and the radial size of the second limiting platform. The radial size of the protruding portion is less than or equal to an inner diameter of the groove portion

Radial sizes of the protruding portion and the groove portion are limited. The radial sizes of the protruding portion and the groove portion are less than those of the first limiting platform and the second limiting platform, so that the elastic component may be mounted between the first limiting platform and the second limiting platform. The radial size of the protruding portion is less than or equal to the inner diameter of the groove portion. Therefore, a transmission connection formed between the protruding portion and the groove portion is a clearance fit or a transition fit, transmission is stable, the protruding portion and the groove portion are allowed to be axially opposite to each other, and a specific processing error is allowed in structures of the protruding portion and the groove portion.

In an embodiment, an interstice between the end surface of the protruding portion and the bottom surface of the groove portion is greater than a length of the elastic component in the compressed state. The side surface of the protruding portion is in clearance fit with the side surface of the groove portion.

The interstice between the end surface of the protruding portion and the bottom surface of the groove portion is greater than the length of the elastic component in the compressed state. In an axially moving process of the protruding portion and the groove portion, the elastic component is always in the compressed state. The side surface of the protruding portion is in clearance fit with the side surface of the groove portion, and the protruding portion and the groove portion are allowed to move axially. A specific axial movement is allowed between the output shaft and the input shaft. Noise and vibration of the motor caused by a mounting error are reduced. In the axially moving process, the elastic component always provides the preload force for the output shaft or the input shaft. Therefore, in the axially moving process, the connection between the output shaft and the input shaft is stable.

In an embodiment, the coupling end of the input shaft is connected and coupled to the coupling end of the output shaft by using splines. The side surface of the protruding portion includes an external spline, and the side surface of the groove portion includes an internal spline.

Spline transmission is stable and reliable, and allows the external spline and the internal spline to move axially. Compared with a shaft key transmission connection under a same shaft diameter, the spline transmission connection bears large torque. In a process of spline transmission, the external spline or the internal spline is subjected to uniform stress, stress concentration is small, and a service life is long. The spline transmission connection has good guidance.

In an embodiment, the elastic component is a waveform spring, and the waveform spring is sleeved on the coupling end of the input shaft and the coupling end of the output shaft. Along the radial direction of the input shaft or a radial direction of the output shaft, an inner diameter of the waveform spring is greater than a radial size of the protruding portion and an outer diameter of the groove portion.

The waveform spring is an elastic element having several peaks and valleys on a thin metal ring. The waveform spring is sleeved on the coupling end of the input shaft and the coupling end of the output shaft, so that the waveform spring may apply an axial preload force to the input shaft or the output shaft. The waveform spring allows the motor to have an axial movement during running and may absorb noise and vibration during running of the motor. Along the radial direction of the input shaft or the radial direction of the output shaft, the inner diameter of the waveform spring is greater than the radial size of the protruding portion and the outer diameter of the groove portion, to facilitate assembly work of the waveform spring. In a process of compressing the waveform spring, wear on the waveform spring is avoided, friction heat and noise are avoided, and a service life of the waveform spring is improved.

In an embodiment, along the radial direction of the input shaft or the radial direction of the output shaft, an outer diameter of the waveform spring is less than a radial size of the first limiting platform and a radial size of the second limiting platform.

The outer diameter of the waveform spring is less than the radial size of the first limiting platform and the radial size of the second limiting platform. This prevents the waveform spring from interfering with the housing or another component. In the axially moving process of the input shaft and the output shaft, a support pivot of the waveform spring in this embodiment is always within a range of the first limiting platform and the second limiting platform, so that the waveform spring can be prevented from being radially bent or from rupturing under pressure in a compression process.

In an embodiment, the first limiting platform includes a first fastening component, the first fastening component is configured to fasten one end of the elastic component, and the second limiting platform is configured to fasten the other end of the elastic component. Alternatively, the second limiting platform includes a second fastening component, the first limiting platform is configured to fasten one end of the elastic component, and the second fastening component is configured to fasten the other end of the elastic component.

One end of the elastic component is fastened to the input shaft or the output shaft by using a fastening component, and the other end is fastened to a limiting platform. When the elastic component needs to be replaced, only the fastening component needs to be detached, so that maintenance is convenient and fast.

In an embodiment, along the radial direction of the input shaft, the elastic component is disposed in an interstice with the first coupling surface or the second coupling surface.

In a compression process, no friction exists between the elastic component and the first coupling surface or the second coupling surface, which are disposed in the interstice. A scratch or wear on the first coupling surface or the second coupling surface is reduced, wear on the elastic component is reduced, and noise generated by friction between the elastic component and the first coupling surface or the second coupling surface is avoided.

In an embodiment, the coupling end of the input shaft includes a first limiting boss, and the first limiting boss is configured to limit displacement of the elastic component along the radial direction of the input shaft. Along the radial direction of the input shaft, a radial size of the first limiting boss is less than the radial size of the first limiting platform. Along the axial direction of the input shaft, an end surface of the first limiting boss faces the second limiting platform, and a distance between the end surface of the first limiting boss and the second limiting platform is less than a distance between the first limiting platform and the second limiting platform.

The first limiting boss is disposed at the coupling end of the input shaft and disposed between the first limiting platform and the second limiting platform. For example, the first limiting boss may be a boss, a bump, a convex surface, or the like, and is configured to limit the displacement of the elastic component along the radial direction of the input shaft. In a process of compressing the elastic component, the elastic component is in contact with the first limiting boss, to limit the displacement of the elastic component along the radial direction of the input shaft. The radial size of the first limiting boss is less than the radial size of the first limiting platform, to facilitate mounting of the elastic component. Along the axial direction of the input shaft, an end surface of the first limiting boss faces the second limiting platform, and a distance between the end surface of the first limiting boss and the second limiting platform is less than a distance between the first limiting platform and the second limiting platform. When the input shaft moves axially, the end surface of the first limiting boss is in contact with the second limiting platform, and there is a specific distance between the first limiting platform and the second limiting platform.

In an embodiment, the elastic component is the waveform spring, and one end of the waveform spring is sleeved on a side surface of the first limiting boss. Along the radial direction of the input shaft, an inner diameter of the elastic component is greater than or equal to the radial size of the first limiting boss. Along the axial direction of the input shaft, the distance between the end surface of the first limiting boss and the second limiting platform is less than the length of the elastic component in the compressed state.

Along the radial direction of the input shaft, the inner diameter of the elastic component is greater than or equal to the radial size of the first limiting boss. In the process of compressing the elastic component, there is no friction force, noise, or friction heat, and the service life of the waveform spring is improved. In a process in which the elastic component is sleeved on the side surface of the first limiting boss, assembly work of the waveform spring is facilitated. Along the axial direction of the input shaft, the distance between the end surface of the first limiting boss and the second limiting platform is less than the length of the elastic component in the compressed state. The compressed state is an operation state of the elastic component under a normal compression amount, that is, the compression amount does not exceed a limit value of a compression amount allowed by the elastic component. When the end surface of the first limiting boss is in contact with the second limiting platform, the elastic component is still in a normal compressed state. For example, in response to axial impact on the automobile or the powertrain, the output shaft compresses the elastic component due to inertia. When the first limiting boss is in contact with the second limiting platform, the elastic component is still in the normal compressed state. The first limiting boss can effectively protect the elastic component and prevent the elastic component from failing because it is completely compressed.

In an embodiment, the coupling end of the output shaft includes a second limiting boss, and the second limiting boss is configured to limit displacement of the elastic component along the radial direction of the output shaft. Along the radial direction of the output shaft, a radial size of the second limiting boss is less than the radial size of the second limiting platform. Along the axial direction of the output shaft, an end surface of the second limiting boss faces the first limiting platform, and a distance between the end surface of the second limiting boss and the first limiting platform is less than the distance between the first limiting platform and the second limiting platform.

The second limiting boss is disposed at the coupling end of the output shaft and disposed between the first limiting platform and the second limiting platform. For example, the second limiting boss may be a boss, a bump, a convex surface, or the like, and is configured to limit the displacement of the elastic component along the radial direction of the input shaft. In the process of compressing the elastic component, the elastic component is in contact with the second limiting boss, to limit the displacement of the elastic component along the radial direction of the input shaft. The radial size of the second limiting boss is less than the radial size of the second limiting platform, to facilitate mounting of the elastic component. Along the axial direction of the input shaft, an end surface of the second limiting boss faces the first limiting platform, and a distance between the end surface of the second limiting boss and the first limiting platform is less than the distance between the first limiting platform and the second limiting platform. When the input shaft moves axially, the end surface of the second limiting boss is in contact with the first limiting platform, and there is a specific distance between the first limiting platform and the second limiting platform.

In an embodiment, the elastic component is the waveform spring, and the other end of the waveform spring is sleeved on a side surface of the second limiting boss. Along the radial direction of the input shaft, the inner diameter of the elastic component is greater than or equal to the radial size of the second limiting boss. Along the axial direction of the input shaft, the distance between the end surface of the second limiting boss and the first limiting platform is less than the length of the elastic component in the compressed state.

Along the radial direction of the input shaft, the inner diameter of the elastic component is greater than or equal to the radial size of the second limiting boss. In the process of compressing the elastic component, there is no friction force, noise, or friction heat, and the service life of the waveform spring is improved. In a process in which the elastic component is sleeved on the side surface of the second limiting boss, assembly work of the waveform spring is facilitated. Along the axial direction of the input shaft, the distance between the end surface of the second limiting boss and the first limiting platform is less than the length of the elastic component in the compressed state. The compressed state is an operation state of the elastic component under a normal compression amount, that is, the compression amount does not exceed a limit value of a compression amount allowed by the elastic component. When the end surface of the second limiting boss is in contact with the first limiting platform, the elastic component is still in a normal compressed state. For example, in response to axial impact on the automobile or the powertrain, the output shaft compresses the elastic component due to inertia. When the second limiting boss is in contact with the first limiting platform, the elastic component is still in the normal compressed state. The second limiting boss can effectively protect the elastic component and prevent the elastic component from failing because it is completely compressed.

In an embodiment, the powertrain 110 may be disposed at another position such as a rear of the automobile 100 or a middle of the automobile 100.

In an embodiment, the automobile 100 may be a pure electric-powered automobile, a hybrid electric vehicle, or another type of automobile or vehicle.

In an embodiment, the reducer may be a reduction mechanism, such as a gear reducer, a worm gear reducer, a belt drive, or a chain drive. In another embodiment, the reducer may be replaced with another transmission mechanism such as a speed increaser.

FIG. 2 is a schematic sectional view of a structure of a first powertrain according to an embodiment of this application. As shown in FIG. 2, a powertrain 110 includes an input shaft 111, an output shaft 112, and an elastic component 113.

In an embodiment, the elastic component 113 is nested at one end of the output shaft 112 and one end of the input shaft 111, and is located between a first limiting platform of the input shaft 111 and a second limiting platform of the output shaft 112. When a motor generates an axial impact force under an inertial force, the elastic component 113 provides a preload force for the input shaft 111 or the output shaft 112, so that the output shaft 112 can be prevented from colliding with the input shaft 111. In an embodiment, before the elastic component 113 is compressed to a limit value, the second limiting platform of the output shaft 112 is in contact with an end surface of the input shaft 111, so that the elastic component 113 can be effectively protected and the elastic component 113 is prevented from failing because it is completely compressed.

In an embodiment, the input shaft 111 may be supported by a first bearing 114 and a second bearing 115. An outer ring of the first bearing 114 is limited by using an intermediate housing 120. An inner ring of the first bearing 114 is limited by a shaft shoulder of the input shaft 111. An outer ring of the second bearing 115 is limited by using a housing 119 of a reducer. An inner ring of the second bearing 115 is limited by the shaft shoulder of the input shaft 111. After being fastened by using the first bearing 114 and the second bearing 115, the input shaft 111 may rotate around an axis of the input shaft 111.

In an embodiment, the input shaft 111 is a gear shaft. In another embodiment, the input shaft 111 may be one or more of reduction mechanisms, such as a gear reducer, a worm gear reducer, a belt drive, and a chain drive.

In an embodiment, a third bearing 116, a motor rotor 117, and a motor stator 118 are mounted on the output shaft 112. In this embodiment of this application, one end of the output shaft 112 is coupled to one end of the input shaft 111, and is configured to transmit kinetic energy of the motor to the input shaft 111. The other end of the output shaft 112 may be supported by the third bearing 116. An outer ring of the third bearing 116 is limited by a housing 121 of the motor. An inner ring of the third bearing 116 is limited by a shaft shoulder of the output shaft 112. The output shaft 112 is fastened by using the third bearing 116 and is coupled to one end of the input shaft 111, and may rotate around an axis of the output shaft 112.

In an embodiment, the motor stator 118 is fixedly connected to the intermediate housing 120. In another embodiment, the motor stator 118 may alternatively be fastened to the intermediate housing 120 after being connected to another structure. In this embodiment of this application, a pair of static main magnetic poles of direct current excitation are mounted on the motor stator 118. In this embodiment of this application, the motor rotor 117 is fixedly connected to the output shaft 112. In another embodiment, the motor rotor 117 may alternatively be fastened to the output shaft 112 after being connected to another structure. The motor rotor 117 is equipped with an armature winding. After being powered on, the armature winding generates an induced electromotive force, is used as a rotating magnetic field, generates an electromagnetic torque for energy conversion, and converts electric energy into mechanical energy.

In an embodiment, the powertrain 110 is of a two-bearing support structure, a three-bearing support structure, a four-bearing support structure, or another form of support structure. Preferably, the powertrain 110 in this embodiment of this application is of a three-bearing support structure.

The motor is an electromagnetic apparatus that implements electric energy conversion or electric energy transfer based on electromagnetic induction. The motor includes a stator part and a rotor part. The stator part of the motor is fastened to the automobile 100 by using the housing. The rotor part of the motor is coupled to the output shaft 112, and the output shaft 112 is disposed at a middle position of the stator part of the motor. When the motor is powered on, the output shaft 112 may rotate around the axis of the output shaft 112, to generate rotational kinetic energy.

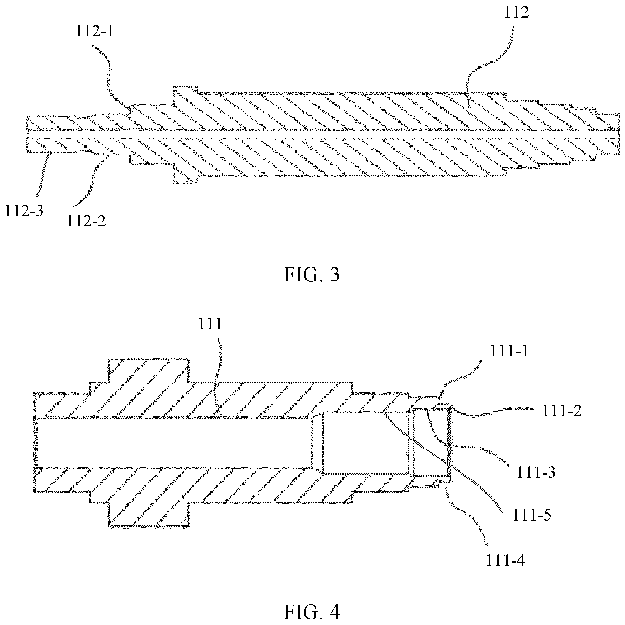

As shown in FIG. 3, the output shaft 112 is an output shaft of the motor. One end of the output shaft 112 is coupled to one end of the input shaft 111, and is configured to provide power for a reducer. The second limiting platform 112-1 is disposed at the coupling end of the output shaft 112. In an embodiment, the coupling end of the output shaft 112 is further provided with a cylindrical surface 112-2 and a second coupling surface 112-3.

The reducer is an independent component including a gear drive and a gear-worm drive that are enclosed in a rigid housing, and is often used as a speed reduction transmission apparatus between a prime mover and a working part. In this application, the reducer includes the input shaft 111 and an output shaft of the reducer. The input shaft 111 is coupled to the output shaft 112. The output shaft of the reducer is coupled to a wheel shaft of the automobile 100. The rotational kinetic energy of the output shaft 112 is transferred to the reducer by using the input shaft 111. The reducer reduces power of the motor when rotating at a high speed to power of the motor when rotating at a low speed, and transfers the power to the wheel shaft of the wheel 120 by using the output shaft of the reducer, to drive the wheel 120 and the automobile 100 to move.

As shown in FIG. 4, the input shaft 111 is an input shaft of the reducer. The first limiting platform 111-1 is disposed at the coupling end of the input shaft 111. In an embodiment, the coupling end of the input shaft 111 is further provided with a first limiting boss 111-2, a cylindrical surface 111-3, an elastic component mounting surface 111-4, and a first coupling surface 111-5.

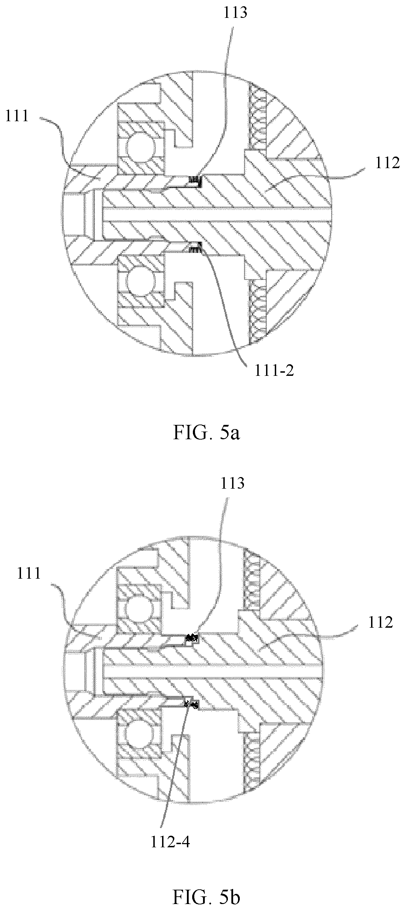

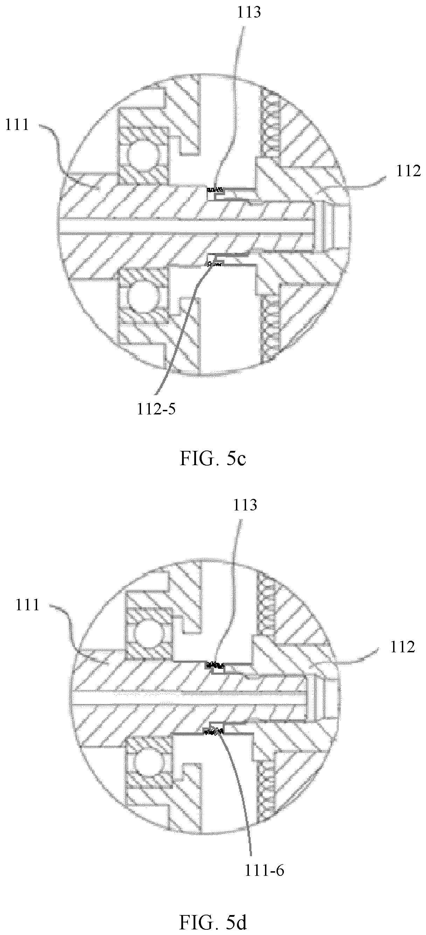

As shown in FIG. 2, FIG. 5a, FIG. 5b, FIG. 5c, and FIG. 5d, FIG. 5a partially enlarges an illustrated part marked with I in FIG. 2. FIG. 5b, FIG. 5c, and FIG. 5d are extensions and descriptions of structures of a partially enlarged part.

In an embodiment, the powertrain 110 includes a motor, a reducer, and an elastic component 113. The reducer includes an input shaft 111, and the motor includes an output shaft 112. The input shaft 111 is coaxially coupled to the output shaft 112. A coupling end of the input shaft 111 includes a first limiting platform 111-1 and a first coupling surface 111-5, and a coupling end of the output shaft includes a second limiting platform 112-1 and a second coupling surface 112-3. The first coupling surface 111-5 and the second coupling surface 112-3 are disposed opposite to each other along a radial direction of the input shaft, and the first coupling surface 111-5 is in contact with the second coupling surface 112-3, so that the output shaft 112 is in transmission connection with the input shaft 111. The first limiting platform 111-1 and the second limiting platform 111-2 are disposed opposite to each other along an axial direction of the input shaft 111. The elastic component 113 is fastened between the first limiting platform 111-1 and the second limiting platform 112-1.

In an embodiment, after one end of the input shaft 111 is coupled to one end of the output shaft 112, the elastic component 113 is disposed between the first limiting platform 111-1 and the second limiting platform 112-1. The elastic component 113 is configured to provide a preload force for the output shaft 112, or provide a preload force for the input shaft 111.

In an embodiment, two ends of the elastic component 113 respectively abut against the first limiting platform 111-1 and the second limiting platform 112-1 for limiting. When the elastic component 113 applies an elastic force to the second limiting platform 112-1 of the output shaft 112, the second limiting platform 112-1 transmits the elastic force to a third bearing 116. The third bearing 116 transmits the elastic force to a housing 121 of the motor, thereby preloading the third bearing 116. The elastic component 113 can prevent the output shaft 112 from axially moving to some extent, ensure running stability of the powertrain 110, and reduce noise and vibration of the powertrain 110 during normal operation.

In an embodiment, a direction of the elastic force of the elastic component 113 is parallel to the axial direction of the input shaft 111 or an axial direction of the output shaft 112. The elastic force of the elastic component 113 is a combined force generated after the elastic component 113 acts on the output shaft 112 or the input shaft 111. The elastic force is parallel to the axial direction of the output shaft 112 or the axial direction of the input shaft 111, and generates good preloading impact. If the direction of the elastic force of the elastic component 113 is not parallel to the axial direction, wear of a component during running is increased, and noise and vibration are generated, thereby affecting stability performance of the motor and the reducer.

In an embodiment, the elastic component 113 is a waveform spring. When the powertrain 110 operates normally, the waveform spring 113 is in a normal compressed state. The waveform spring 113 applies an axial preload force to the third bearing 116 by using the output shaft 112. A side that is of an outer ring of the third bearing 116 and that is away from the reducer is limited by the housing 121 of the motor.

In an embodiment, two ends of the elastic component 113 respectively abut against the first limiting platform 111-1 and the second limiting platform 112-1, so that the elastic component 113 is in a compressed state. The compressed state of the elastic component 113 includes a first compressed state and a second compressed state. The input shaft 111 and the output shaft 112 of the motor move relative to each other along the axial direction of the input shaft 111, so that the elastic component 113 is switched from the first compressed state to the second compressed state. A length of the elastic component 113 in the second compressed state is greater than or less than a length of the elastic component 113 in the first compressed state.

In an embodiment, in response to axial impact on the automobile or the powertrain, the output shaft compresses the elastic component due to inertia, so that the elastic component is switched from the first compressed state to the second compressed state. When the output shaft moves away from the input shaft, the length of the elastic component in the second compressed state is greater than the length of the elastic component in the first compressed state. When the output shaft moves close to the input shaft, the length of the elastic component in the second compressed state is less than the length of the elastic component in the first compressed state. The elastic component can adapt to different operation conditions by using the two compressed states of the elastic component.

In an embodiment, there is a mounting error in the motor. When the motor runs stably, the elastic component is switched from the first compressed state to the second compressed state, and the output shaft 112 axially moves. In a running process of the motor, a compression amount of the elastic component 113 is increased or reduced, so that the elastic component 113 can absorb the mounting error, to prevent the motor from transferring, to a subsequent transmission structure, such as the reducer, vibration caused by the mounting error, and reduce vibration and noise generated by the powertrain 110. In this embodiment of this application, the existence of the elastic component 113 allows the motor to have an axial movement during running. Compared with a manner in which inner and outer rings of a bearing of a motor are completely fastened, this reduces an assembly requirement of the motor and a design requirement of a housing.

In an embodiment, one of the coupling end of the input shaft 111 and the coupling end of the output shaft 112 includes a protruding portion, the other of the coupling end of the input shaft 111 and the coupling end of the output shaft 112 includes a groove portion, and the protruding portion is embedded in the groove portion along the axial direction of the input shaft 111 or an axial direction of the output shaft 112 to form a transmission connection. Along the axial direction of the input shaft 111 or the axial direction of the output shaft 112, an end surface of the protruding portion is disposed opposite to a bottom surface of the groove portion. A side surface of the protruding portion forms one of the first coupling surface 111-5 and the second coupling surface 112-3, and a side surface of the groove portion forms the other of the first coupling surface 111-5 and the second coupling surface 112-3.

In an embodiment, along the radial direction of the input shaft 111 or a radial direction of the output shaft 112, a radial size of the protruding portion is less than a radial size of the first limiting platform 111-1 and a radial size of the second limiting platform 112-1, and an outer diameter of the groove portion is less than the radial size of the first limiting platform 111-1 and the radial size of the second limiting platform 112-1. The radial size of the protruding portion is less than or equal to an inner diameter of the groove portion

In an embodiment, an interstice between the end surface of the protruding portion and the bottom surface of the groove portion is greater than a length of the elastic component 113 in the compressed state. The side surface of the protruding portion is in clearance fit with the side surface of the groove portion.

In an embodiment, the coupling end of the input shaft 111 is connected and coupled to the coupling end of the output shaft 112 by splines. The side surface of the protruding portion includes an external spline, and the side surface of the groove portion includes an internal spline.

In an embodiment, the elastic component 113 is a waveform spring, and the waveform spring is sleeved on the coupling end of the input shaft 111 and the coupling end of the output shaft 112. Along the radial direction of the input shaft 111 or a radial direction of the output shaft 112, an inner diameter of the waveform spring is greater than a radial size of the protruding portion and an outer diameter of the groove portion.

In an embodiment, the elastic component 113 is a waveform spring, and the waveform spring is nested at one or more of the coupling end of the input shaft 111 and the coupling end of the output shaft 112. In another embodiment, the elastic component 113 may be one or more of elastic components such as a column spring or a disc spring.

In an embodiment, along the radial direction of the input shaft 111 or the radial direction of the output shaft 112, an outer diameter of the waveform spring is less than a radial size of the first limiting platform 111-1 and a radial size of the second limiting platform 112-1.

In an embodiment, as shown in FIG. 5a and FIG. 5b, an interstice between the end surface of the protruding portion of the output shaft 112 and the bottom surface of the groove portion of the input shaft 111 is greater than or equal to a length of the elastic component in the compressed state. In another embodiment, as shown in FIG. 5c and FIG. 5d, an interstice between the end surface of the protruding portion of the input shaft 111 and the bottom surface of the groove portion of the output shaft 112 is greater than or equal to a length of the elastic component in the compressed state.

In an embodiment, the side surface of the protruding portion is in clearance fit with the side surface of the groove portion. The groove portion may be a structure, such as an internal spline hole, when splines are connected, or a key slot hole when shaft keys are connected. The protruding portion of the output shaft 112 is embedded in the groove portion at one end of the input shaft 111. A distance between the second limiting platform 111-2 of the output shaft 112 and an end surface of one end of the output shaft 112 is less than a length of the elastic component 113 in the compressed state. The output shaft 112 allows a specific axial movement during running. Noise and vibration of the motor caused by a mounting error are reduced. The elastic component 113 provides a preload force for the output shaft.

In an embodiment, a distance between the first limiting platform 111-1 of the input shaft 111 and the second limiting platform 112-1 of the output shaft 112 is greater than or equal to a length of the elastic component when the elastic component is compressed to a limit value. The limit value of a compression amount is a maximum compression amount of the elastic component 113 without plastic deformation. When the compression amount of the elastic component 113 exceeds the limit value, the elastic component 113 generates plastic deformation or even fails. The distance between the first limiting platform 111-1 of the input shaft 111 and the second limiting platform 112-1 of the output shaft 112 is greater than or equal to the length of the elastic component 113 when the elastic component 113 is compressed to the limit value, so that the elastic component 113 can be protected from generating plastic deformation, and therefore cannot be crushed and fail.

In an embodiment, the groove portion of the input shaft 111 is provided with a cylindrical surface 111-3, and the protruding portion of the output shaft 112 is provided with a cylindrical surface 112-2. The cylindrical surface 111-3 is coupled to the cylindrical surface 112-2 to form a cylindrical surface contact pair. In an embodiment, the cylindrical surface contact pair provides radial positioning and support functions for the output shaft 112. For example, a first bearing 114 and a second bearing 115 are mounted on the input shaft 111, and a third bearing 116 is mounted on the output shaft 112. Therefore, the cylindrical surface contact pair provides radial positioning and support functions for the output shaft 112. In another embodiment, due to a change in a support manner, the cylindrical surface contact pair may provide radial positioning and support functions for the input shaft 111, or may provide radial positioning and support functions for both the output shaft 112 and the input shaft 111.

In an embodiment, the side surface of the protruding portion includes an external spline, the side surface of the groove portion includes an internal spline, and the internal spline and the external spline are disposed on the input shaft 111 and the output shaft 112 to transfer power. In an embodiment, as shown in FIG. 5a and FIG. 5b, an internal spline is disposed at the coupling end of the input shaft 111. An external spline is disposed at the coupling end of the output shaft 112. For example, the coupling end of the input shaft 111 is provided with the first coupling surface 111-5, and the first coupling surface 111-5 is the internal spline. The coupling end of the output shaft 112 is provided with the second coupling surface 112-3, and the second coupling surface 112-3 is the external spline and is configured to transfer torque of the input shaft 111. In an embodiment, as shown in FIG. 5c and FIG. 5d, an external spline is disposed at the coupling end of the input shaft 111, and an internal spline is disposed at the coupling end of the output shaft 112. Compared with another transmission method, spline transmission is more stable. The spline transmission bears large torque under a same shaft diameter. During spline transmission, a spline is subjected to uniform stress, stress concentration is small, and a service life is long. The spline transmission connection has good guidance. In a process of spline transmission, splines may appropriately move axially.

In an embodiment, a spline of the input shaft 111 is connected to a spline of the output shaft 112, so that the input shaft 111 and the output shaft 112 do not rotate relative to each other. The elastic component 113 is not worn out. In another embodiment, the input shaft 111 is connected to the output shaft 112 by using a shaft key, a length of a key slot is greater than a length of the key, and the input shaft 111 and the output shaft 112 are allowed to axially move.

In an embodiment, the first limiting platform 111-1 includes a first fastening component, the first fastening component is configured to fasten one end of the elastic component 113, and the second limiting platform 112-1 is configured to fasten the other end of the elastic component 113. Alternatively, the second limiting platform 112-1 includes a second fastening component, the first limiting platform 111-1 is configured to fasten one end of the elastic component 113, and the second fastening component is configured to fasten the other end of the elastic component 113.

In an embodiment, the first limiting platform 111-1 of the input shaft 111 is provided with a first fastening component. One end of the elastic component 113 is coupled to the first fastening component of the input shaft 111. In another embodiment, the second limiting platform 112-1 of the output shaft 112 is provided with a second fastening component. One end of the elastic component 113 is coupled to the second fastening component of the output shaft 112. In another embodiment, the first limiting platform 111-1 of the input shaft 111 and the second limiting platform 112-1 of the output shaft 112 are respectively provided with a first fastening component and a second fastening component. One end of the elastic component 113 is coupled to the first fastening component of the input shaft 111, and the other end is coupled to the second fastening component of the output shaft 112.

In an embodiment, a coupling relationship between the elastic component 113 and the input shaft 111 or the output shaft 112 may be one or more of contact, nesting, bonding, screwing, welding, abutting, and the like. In an embodiment, the fastening component may be a screw and nut, a spring washer, or the like. In another embodiment, the fastening component may be a structure such as a groove or a limiting block, which is disposed on the input shaft 111 or the output shaft 112.

In an embodiment, along the radial direction of the input shaft 111, the elastic component 113 is disposed in an interstice with the first coupling surface 111-5 or the second coupling surface 112-3.

In an embodiment, the elastic component 113 is disposed in an interstice with the first coupling surface 111-5 or the second coupling surface 112-3. In an interstice position between the elastic component 113 and the first coupling surface 111-5 or the second coupling surface 112-3, a first limiting boss 111-2 is disposed at the coupling end of the input shaft 111, or a second limiting boss is disposed at the coupling end of the output shaft 112.

In an embodiment, the coupling end of the input shaft 111 includes a first limiting boss 111-2, and the first limiting boss 111-2 is configured to limit displacement of the elastic component 113 along the radial direction of the input shaft 111. Along the radial direction of the input shaft 111, a radial size of the first limiting boss 111-2 is less than the radial size of the first limiting platform 111-1. Along the axial direction of the input shaft 111, an end surface of the first limiting boss 111-2 faces the second limiting platform 112-1, and a distance between the end surface of the first limiting boss 111-2 and the second limiting platform 112-1 is less than a distance between the first limiting platform 111-1 and the second limiting platform 112-1.

In an embodiment, the elastic component 113 is the waveform spring, and one end of the waveform spring is sleeved on a side surface of the first limiting boss 111-2. Along the radial direction of the input shaft 111, an inner diameter of the elastic component 113 is greater than or equal to the radial size of the first limiting boss 111-2. Along the axial direction of the input shaft 111, the distance between the end surface of the first limiting boss 111-2 and the second limiting platform 112-1 is less than the length of the elastic component 113 in the compressed state.

In an embodiment, the coupling end of the output shaft 112 includes a second limiting boss, and the second limiting boss is configured to limit displacement of the elastic component 113 along the radial direction of the output shaft 112. Along the radial direction of the output shaft 112, a radial size of the second limiting boss is less than the radial size of the second limiting platform 112-1. Along the axial direction of the output shaft 112, an end surface of the second limiting boss faces the first limiting platform 111-1, and a distance between the end surface of the second limiting boss and the first limiting platform 111-1 is less than the distance between the first limiting platform 111-1 and the second limiting platform 112-1.

In an embodiment, the elastic component 113 is the waveform spring, and the other end of the waveform spring is sleeved on a side surface of the second limiting boss. Along the radial direction of the input shaft 111, the inner diameter of the elastic component 113 is greater than or equal to the radial size of the second limiting boss. Along the axial direction of the input shaft 111, the distance between the end surface of the second limiting boss and the first limiting platform 111-1 is less than the length of the elastic component 113 in the compressed state.

In an embodiment, the first limiting boss 111-2 is configured to enable the distance between the first limiting platform 111-1 of the input shaft 111 and the second limiting platform 112-1 of the output shaft 112 to be greater than or equal to a length of the elastic component when the elastic component is compressed to a limit value.

In an embodiment, the distance between the first limiting platform 111-1 of the input shaft 111 and the second limiting platform 112-1 of the output shaft 112 is greater than or equal to a first set threshold, where the first set threshold is a length of the elastic component when the elastic component is compressed to a limit value. This may be implemented by adding a protruding limiting shaft shoulder, a protruding point, a protruding block, or the like to the input shaft 111 or the output shaft 112. For example, the first limiting boss may be disposed on the input shaft 111, or the second limiting boss may be disposed on the output shaft 112. The distance between the first limiting platform 111-1 of the input shaft 111 and the second limiting platform 112-1 of the output shaft 112 is greater than or equal to the first set threshold.

In an embodiment, a first limiting boss 111-2 is disposed on the input shaft 111 and disposed between the first limiting platform 111-1 and the second limiting platform 112-1. A distance between the first limiting boss 111-2 and the second limiting platform 112-1 is greater than or equal to the length of the elastic component 113 in the compressed state. When the first limiting boss 111-2 is in contact with the second limiting platform 112-1, the elastic component 113 is still in a normal compressed state.

In an embodiment, a second limiting boss is disposed on the output shaft 112 and between the first limiting platform 111-1 and the second limiting platform 112-1. A distance between the second limiting boss and the first limiting platform 111-1 is greater than or equal to the length of the elastic component 113 in the compressed state. When the second limiting boss is in contact with the first limiting platform 111-1, the elastic component 113 is still in a normal compressed state.

In an embodiment, the first limiting boss and the second limiting boss may be a protruding point, a protruding block, or a protruding surface. For example, the first limiting boss of the input shaft 111 may be a protruding surface, for example, may be the first limiting boss 111-2 shown in FIG. 5a, or may be the shaft shoulder surface 111-6 shown in FIG. 5d. The second limiting boss of the output shaft 112 may be a protruding surface, for example, may be a shaft shoulder surface 112-4 shown in FIG. 5b, or may be an end surface 112-5 shown in FIG. 5c. Only the first limiting boss or the second limiting boss may be disposed, or both the first limiting boss and the second limiting boss may be disposed.

In an embodiment, as shown in FIG. 5a, the first limiting boss may be the first limiting boss 111-2 of the input shaft 111, and is disposed on the first limiting platform 111-1 of the input shaft 111. In response to axial impact on the automobile 100 or the powertrain 110, the motor rotor compresses the elastic component 113 due to inertia, and the first limiting boss 111-2 of the input shaft 111 is in contact with the second limiting platform 112-1 of the output shaft 112. A distance between the first limiting boss 111-2 and the first limiting platform 111-1 is greater than or equal to the length of the elastic component 113 in the compressed state. The compressed state is a normal operation state in which the elastic component 113 is not crushed before being compressed to a limit value. Therefore, when the first limiting boss 111-2 of the input shaft 111 is in contact with the second limiting platform 112-1 of the output shaft 112, the elastic component 113 is in the compressed state and is not compressed to the limit value, thereby effectively protecting the elastic component 113 and preventing the elastic component 113 from failing because it is completely compressed.

In an embodiment, as shown in FIG. 5b, the second limiting boss may be the shaft shoulder surface 112-4 of the output shaft 112, and is disposed on the second limiting platform 112-1 of the output shaft 112. In response to axial impact on the automobile 100 or the powertrain 110, the motor rotor compresses the elastic component 113 due to inertia, and then the limiting platform of the input shaft 111 is in contact with the shaft shoulder surface 112-4 of the output shaft 112. A distance between the shaft shoulder surface 112-4 and the second limiting platform 112-1 is greater than or equal to the length of the elastic component 113 when the elastic component 113 is compressed to a limit value. Therefore, when the limiting platform of the input shaft 111 is in contact with the shaft shoulder surface 112-4 of the output shaft 112, the elastic component 113 is not compressed to the limit value, thereby effectively protecting the elastic component 113 and preventing the elastic component 113 from failing because it is completely compressed.

In an embodiment, as shown in FIG. 5c, the second limiting boss may be the end surface 112-5 of the output shaft 112, and is disposed on the second limiting platform 112-1 of the output shaft 112. In response to axial impact on the automobile 100 or the powertrain 110, the motor rotor compresses the elastic component 113 due to inertia, and then the limiting platform of the input shaft 111 is in contact with the end surface 112-5 of the output shaft 112. A distance between the end surface 112-5 and the second limiting platform 112-1 is greater than or equal to the length of the elastic component 113 when the elastic component 113 is compressed to a limit value. Therefore, when the limiting platform of the input shaft 111 is in contact with the end surface 112-5 of the output shaft 112, the elastic component 113 is not compressed to the limit value, thereby effectively protecting the elastic component 113 and preventing the elastic component 113 from failing because it is completely compressed.

In an embodiment, as shown in FIG. 5d, the first limiting boss may be the shaft shoulder surface 111-6 of the input shaft 111, and is disposed on the first limiting platform 111-1 of the input shaft 111. In response to axial impact on the automobile 100 or the powertrain 110, the motor rotor compresses the elastic component 113 due to inertia, and then the shaft shoulder surface 111-6 of the input shaft 111 is in contact with the second limiting platform 112-1 of the output shaft 112. A distance between the shaft shoulder surface 111-6 and the first limiting platform 111-1 is greater than or equal to the length of the elastic component 113 when the elastic component 113 is compressed to a limit value. Therefore, when the shaft shoulder surface 111-6 of the input shaft 111 is in contact with the second limiting platform 112-1 of the output shaft 112, the elastic component 113 is not compressed to the limit value, thereby effectively protecting the elastic component 113 and preventing the elastic component 113 from failing because it is completely compressed.

In an embodiment, an elastic component mounting surface 111-4 that facilitates mounting of the elastic component 113 is disposed on the side surface of the first limiting boss of the input shaft 111, so that mounting of the elastic component 113 can be facilitated, and the elastic component 113 is prevented from being deformed and falling off in an assembly process. Because the elastic component 113 is fastened to the elastic component mounting surface 111-4, when the drive assembly 110 is impacted, the elastic component 113 shrinks within the elastic component mounting surface 111-4. In this mounting manner, the waveform spring can be effectively prevented from being compressed to fail.

In an embodiment, when the automobile 100 encounters a large obstacle or another operation condition such as a collision and generates a large impact force, the elastic component of the powertrain 110 absorbs some vibration energy. Before the elastic component is compressed to the limit value, the second limiting platform 112-1 of the output shaft 112 is in contact with the first limiting boss 111-2 of the input shaft 111. The impact force is transferred to a housing 119 of the reducer, so that the elastic component can be prevented from generating plastic deformation and failing because a compression amount of the elastic component exceeds the limit value, a quantity of times of replacing the elastic component is reduced, and a product cost of the automobile 100 is reduced. In addition to the limiting contact manner provided in this embodiment of this application, all other methods for limiting contact before the elastic component is compressed to the limit value fall within the protection scope of this application.

In an embodiment, when the automobile 100 is subjected to an impact force, the output shaft 112 is in contact with the input shaft 111. It is assumed that a contact position of the input shaft 111 is a first contact position, and a contact position of the output shaft 112 is a second contact position. For example, the first contact position is the first limiting boss 111-2 at one end of the input shaft 111, and the second contact position is the second limiting platform 112-1 of the output shaft 112. In an embodiment, the first contact position is an end surface or a shaft shoulder surface of one end of the input shaft 111, and the second contact position is an end surface or a shaft shoulder surface of the output shaft 112. In another embodiment, the contact manner of the second limiting platform 112-1 of the output shaft 112 and the first limiting boss 111-2 of the input shaft 111 may be implemented by adding a protruding limiting shaft shoulder, a protruding point, a protruding block, or the like to the input shaft 111 or the output shaft 112.

In an embodiment, before the elastic component is compressed to the limit value, the second limiting platform 112-1 of the output shaft 112 is in contact with the first limiting boss 111-2 of the input shaft 111. The elastic component 113 is protected from generating plastic deformation, so that the elastic component 113 is not crushed and does not fail. In another embodiment, the shaft shoulder surface of the output shaft 112 may be in contact with the first limiting boss 111-2 of the input shaft 111, to protect the elastic component 113.

In an embodiment, the powertrain 110 is axially impacted, and the output shaft 112 or the drive assembly 110 is moved toward an end of the reducer under an inertial force. The output shaft 112 compresses the elastic component 113 by using the second limiting platform 112-1 until the second limiting platform 112-1 of the output shaft is in contact with the first limiting boss 111-2 of the input shaft 111. The impact force is transferred by the input shaft 111 to the housing 119 of the reducer by using the second bearing 115, and is absorbed by the housing 119 of the reducer. The elastic component 113 only bears a compressive force of a specific deformation amount. The elastic component 113 generates plastic deformation without exceeding the limit value, thereby preventing the waveform spring from being repeatedly impacted and failing.

In an embodiment, the elastic component 113 is a waveform spring. A radius of an inner circle of the waveform spring is greater than or equal to a radius of an outer circle of the first limiting boss 111-1 of the input shaft 111, to facilitate mounting of the elastic component 113. For example, the waveform spring is mounted on the elastic component mounting surface 111-4 of the input shaft 111, and the radius of the inner circle of the waveform spring is greater than or equal to the radius of the outer circle of the elastic component mounting surface 111-4 of the input shaft 111. In another embodiment, the radius of the inner circle of the waveform spring is greater than or equal to a radius of an outer circle of the second limiting boss of the output shaft 112, or is greater than or equal to a radius of an outer circle of the first limiting boss between the input shaft 111 and the output shaft 112. For example, the waveform spring is mounted on an elastic component mounting surface of the output shaft 112. In this embodiment of this application, the radius of the inner circle of the elastic component 113 is a minimum radius of an inner ring of the elastic component 113, and the radius of the outer circle of the first limiting boss or the second limiting boss is a maximum radius of an outer ring of the output shaft 112.

In another embodiment, the elastic component 113 is a waveform spring. The radius of the inner circle of the waveform spring is less than the radius of the outer circle of the first limiting boss of the input shaft 111 or the radius of the outer circle of the second limiting boss of the output shaft 112. Because the waveform spring is elastic, the inner circle of the waveform spring is in close contact with the outer circle of the first limiting boss or the second limiting boss. A friction force exists between the waveform spring and an outer side of the outer circle of the first limiting boss or the second limiting boss, so that the waveform spring can be prevented from being loose.

In an embodiment, the powertrain 110 further includes an intermediate housing 120. The intermediate housing 120 is disposed between the housing 121 of the motor and the housing 119 of the reducer, and is configured to fasten the housing 121 of the motor and the housing 119 of the reducer. In this embodiment of this application, the intermediate housing 120 is an integrated housing of the motor and the reducer. The housing 119 of the reducer and the intermediate housing 120 form an envelope housing of the reducer. The intermediate housing 120 and the housing 121 of the motor form an envelope housing of the motor. In this embodiment of this application, the housing of the powertrain 110 is integrated by using an intermediate housing 120, to facilitate mounting, debugging, and subsequent maintenance of the powertrain 110, and save space occupied by the powertrain 110.

In another embodiment, the housing 121 of the motor in the powertrain 110 is directly connected to the housing 119 of the reducer. In this mounting manner, existing products may be used as the motor and the reducer. Because the housing is not designed in an integrated manner, an overall volume of the powertrain 110 is large.

In another embodiment, when mounting interfaces of the motor and the reducer do not match, an intermediate adapter frame needs to be designed for mounting. One end of the intermediate adapter frame is connected to the mounting interface of the motor, and the other end is connected to the mounting interface of the reducer. The housing 121 of the motor and the housing 119 of the reducer are mounted by using the intermediate adapter frame.

The following describes a force applied to the powertrain 110. An operation state of the drive assembly 110 or the automobile 100 includes a normal operation state and an operation state when the drive assembly 110 or the automobile 100 is impacted, and a force applied to the motor under a related operation state is analyzed. The following force analysis is described by using the embodiments of this application in FIG. 2 to FIG. 5 as an example. A corresponding conclusion may also be obtained through force analysis in another embodiment. Details are not described herein again.

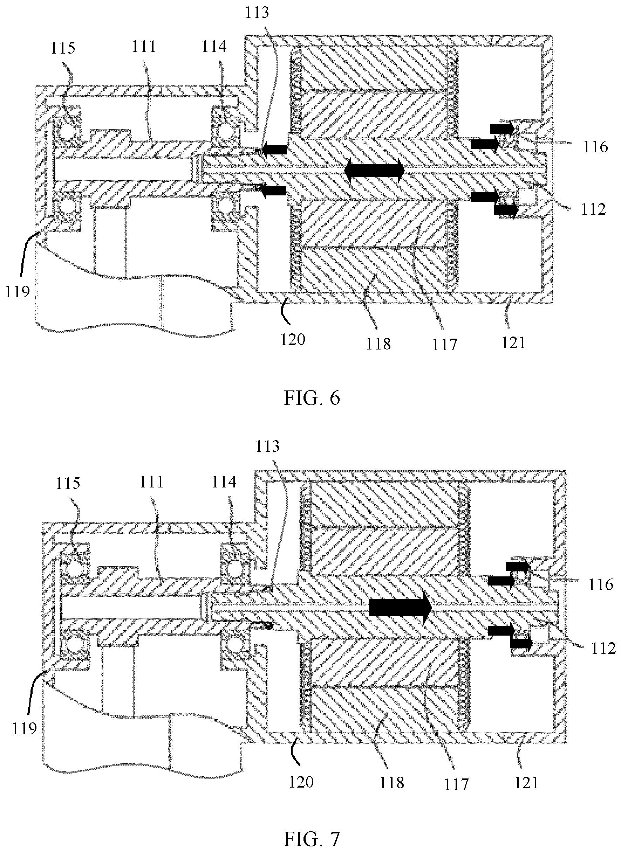

FIG. 6 is a schematic diagram of force transfer of a powertrain during normal operation according to an embodiment of this application. As shown in FIG. 6, when the motor runs stably, the output shaft 112 has a specific axial movement, causing a vibration impact force for the motor close to the reducer or away from the reducer. If the axial movement causes a vibration impact force for the motor close to the reducer, the motor may increase the compression amount of the elastic component 113, so that the vibration impact force for the motor close to the reducer is absorbed by the elastic component 113. If the axial movement causes a vibration impact force for the motor away from the reducer, the vibration impact force for the motor away from the reducer is transferred to an inner ring of the third bearing 116 by using the output shaft 112. An outer ring of the third bearing 116 transfers the vibration impact force for the motor away from the reducer to the housing 121 of the motor. In addition, the output shaft 112 reduces the compression amount of the elastic component 113, so that the axial movement is absorbed by the elastic component 113 without affecting a force applied to the input shaft 111.

In this embodiment of this application, it is equivalent to that the elastic component 113 absorbs the mounting error, and vibration caused by the mounting error is not transferred to a subsequent transmission structure such as a reducer, thereby reducing vibration and noise generated by the powertrain 110.

When the powertrain 110 operates normally, the waveform spring 113 is located between the first limiting platform 111-1 of the input shaft 111 and the second limiting platform 112-1 of the output shaft 112. In this case, the waveform spring 113 is in the normal compressed state. The waveform spring 113 applies an axial preload force to the third bearing 116 on a side of the output shaft 112. A side that is of the outer ring of the third bearing 116 and that is away from the reducer is limited by the housing 121 of the motor, and the waveform spring 113 absorbs the vibration and the noise generated by the powertrain 110.

FIG. 7 is a schematic diagram of force transfer when a powertrain is subjected to an impact force in a direction away from a reducer according to an embodiment of this application. As shown in FIG. 7, when the powertrain 110 or the automobile 100 is subjected to an impact force in a direction away from the reducer. A direction of the impact force in the direction away from the reducer is parallel to an axial direction of the motor, or forms a specific angle with an axial direction of the motor. The impact force in the direction away from the reducer forms a specific angle with the axial direction of the motor, and there is an axial component force. The impact force in the direction away from the reducer is transferred to the inner ring of the third bearing 116 by using the output shaft 112, and then the impact force in the direction away from the reducer is transferred to the housing 121 of the motor by using the outer ring of the third bearing 116. In addition, the output shaft 112 generates a small axial movement in the direction away from the reducer, and the compression amount of the elastic component 113 is reduced, so that the axial movement is absorbed by the elastic component 113 without affecting the force applied to the input shaft 111.

In this embodiment of this application, when the automobile 100 encounters an obstacle or another operation condition such as a collision and generates the impact force in the direction away from the reducer, the impact force in the direction away from the reducer is transferred to the third bearing 116 by using the output shaft 112. The impact force in the direction away from the reducer is then transferred to the housing 121 of the motor by using the third bearing 116. Because of existence of the elastic component 113, the force applied to the input shaft 111 is not affected. A service life of the input shaft 111 of the powertrain 110 and a service life of another component of the reducer are improved. A maintenance cost of the automobile 100 is reduced.

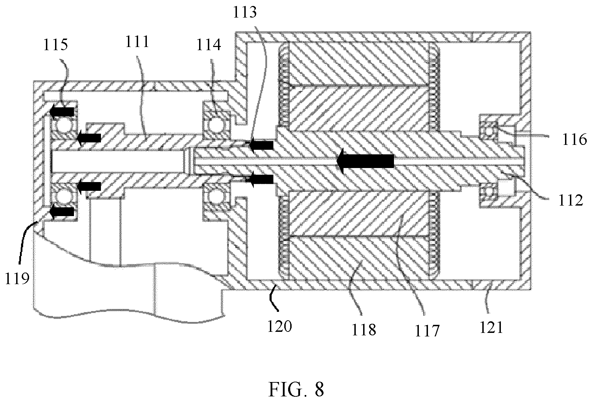

FIG. 8 is a schematic diagram of force transfer when a powertrain is subjected to an impact force in a direction close to a reducer according to an embodiment of this application. As shown in FIG. 8, the powertrain 110 or the automobile 100 is subjected to an impact force in a direction close to the reducer. The impact force in the direction close to the reducer may be a direction of an impact force parallel to an axial direction of the motor, or an impact force that forms a specific angle with an axial direction of the motor and that has an axial component force. The impact force close to the reducer is transferred to the output shaft 112. The output shaft 112 transfers the impact force close to the reducer to the elastic component 113. After the elastic component 113 is compressed to a specific compression amount, the second limiting platform 112-1 of the output shaft 112 is in contact with the first limiting boss 111-2 of the input shaft 111. The output shaft 112 transfers the impact force close to the reducer to the input shaft 111. The input shaft 111 transfers the impact force close to the reducer to an inner ring of the second bearing 115. An outer ring of the second bearing 115 transfers the impact force in the direction away from the reducer to the housing 119 of the reducer.

In an embodiment, the elastic component mounting surface 111-4 that facilitates mounting of the elastic component 113 is disposed on the input shaft 111, so that mounting of the waveform spring is facilitated, and the waveform spring is prevented from being deformed and falling off in an assembly process. When the drive assembly 110 is impacted, the waveform spring 113 shrinks within the elastic component mounting surface 111-4. In this mounting manner, the waveform spring can be effectively prevented from being compressed to fail.

In this embodiment of this application, when the automobile 100 encounters an obstacle or another operation condition such as a collision and generates the impact force in the direction close to the reducer, the elastic component of the powertrain 110 absorbs some vibration energy. Before the elastic component is compressed to the limit value, the second limiting platform 112-1 of the output shaft is in contact with the first limiting boss 111-2 of the input shaft, so that the impact force is transferred to the housing 119 of the reducer. In this embodiment of this application, when the powertrain 110 is subjected to large axial impact in the direction close to the reducer, the impact force is absorbed by the housing. The elastic component 113 only bears a compressive force of a specific deformation amount, that is, the elastic component 113 generates plastic deformation without exceeding the limit value, thereby preventing the waveform spring from being repeatedly impacted and failing, preventing the elastic component from generating plastic deformation because the compression amount of the elastic component exceeds the limit value, reducing a quantity of times of replacing the elastic component, and reducing a product cost of the automobile 100.

## Claims

1. A powertrain (110), wherein the powertrain (110) comprises a motor, a reducer, and an elastic component (113), the reducer comprises an input shaft (111), the motor comprises an output shaft (112), the input shaft (111) is coaxially coupled to the output shaft (112), a coupling end of the input shaft (111) comprises a first limiting platform (1, 111) and a first coupling surface (5, 111), and a coupling end of the output shaft (112) comprises a second limiting platform (1, 2, 111, 112) and a second coupling surface (3, 112), wherein
the first coupling surface (5, 111) and the second coupling surface (3, 112) are disposed opposite to each other along a radial direction of the input shaft (111), and the first coupling surface (5, 111) is in contact with the second coupling surface (3, 112), so that the output shaft (112) is in transmission connection with the input shaft (111);
the first limiting platform (1, 111) and the second limiting platform (1, 2, 111, 112) are disposed opposite to each other along an axial direction of the input shaft (111); and
the elastic component (113) is fastened between the first limiting platform (1, 111) and the second limiting platform (1, 2, 111, 112);
**characterised in that**
one of the coupling end of the input shaft (111) and the coupling end of the output shaft (112) comprises a protruding portion, the other of the coupling end of the input shaft (111) and the coupling end of the output shaft (112) comprises a groove portion, and the protruding portion is embedded in the groove portion along the axial direction of the input shaft (111) or an axial direction of the output shaft (112) to form a transmission connection, wherein
along the axial direction of the input shaft (111) or the axial direction of the output shaft (112), an end surface (5, 112) of the protruding portion is disposed opposite to a bottom surface of the groove portion, a side surface of the protruding portion forms one of the first coupling surface (5, 111) and the second coupling surface (3, 112), and a side surface of the groove portion forms the other of the first coupling surface (5, 111) and the second coupling surface (3, 112).

2. The powertrain (110) according to claim 1, wherein two ends of the elastic component (113) respectively abut against the first limiting platform (1, 111) and the second limiting platform (1, 2, 111, 112), so that the elastic component (113) is in a compressed state, wherein
the compressed state of the elastic component (113) comprises a first compressed state and a second compressed state, the input shaft (111) and the output shaft (112) of the motor move relative to each other along the axial direction of the input shaft (111), so that the elastic component (113) is switched from the first compressed state to the second compressed state, and a length of the elastic component (113) in the second compressed state is greater than or less than a length of the elastic component (113) in the first compressed state.

3. The powertrain (110) according to claim 1, wherein along the radial direction of the input shaft (111) or a radial direction of the output shaft (112), a radial size of the protruding portion is less than a radial size of the first limiting platform (1, 111) and a radial size of the second limiting platform (1, 2, 111, 112), an outer diameter of the groove portion is less than the radial size of the first limiting platform (1, 111) and the radial size of the second limiting platform (1, 2, 111, 112), and the radial size of the protruding portion is less than or equal to an inner diameter of the groove portion.

4. The powertrain (110) according to claim 1, wherein an interstice between the end surface (5, 112) of the protruding portion and the bottom surface of the groove portion is greater than a length of the elastic component (113) in the compressed state, and the side surface of the protruding portion is in clearance fit with the side surface of the groove portion.

5. The powertrain (110) according to claim 1, wherein the coupling end of the input shaft (111) is connected and coupled to the coupling end of the output shaft (112) by using splines, the side surface of the protruding portion comprises an external spline, and the side surface of the groove portion comprises an internal spline.

6. The powertrain (110) according to claim 1, wherein the elastic component (113) is a waveform spring (113), and the waveform spring (113) is sleeved on the coupling end of the input shaft (111) and the coupling end of the output shaft (112), wherein
along the radial direction of the input shaft (111) or a radial direction of the output shaft (112), an inner diameter of the waveform spring (113) is greater than a radial size of the protruding portion and an outer diameter of the groove portion.

7. The powertrain (110) according to claim 6, wherein along the radial direction of the input shaft (111) or the radial direction of the output shaft (112), an outer diameter of the waveform spring (113) is less than a radial size of the first limiting platform (1, 111) and a radial size of the second limiting platform (1, 2, 111, 112).

8. The powertrain (110) according to any one of claims 1 to 7, wherein the first limiting platform (1, 111) comprises a first fastening component, the first fastening component is configured to fasten one end of the elastic component (113), and the second limiting platform (1, 2, 111, 112) is configured to fasten the other end of the elastic component (113); or
the second limiting platform (1, 2, 111, 112) comprises a second fastening component, the first limiting platform (1, 111) is configured to fasten one end of the elastic component (113), and the second fastening component is configured to fasten the other end of the elastic component (113).

9. The powertrain (110) according to any one of claims 1 to 8, wherein along the radial direction of the input shaft (111), the elastic component (113) is disposed in an interstice with the first coupling surface (5, 111) or the second coupling surface (3, 112).

10. The powertrain (110) according to any one of claims 1 to 9, wherein the coupling end of the input shaft (111) comprises a first limiting boss (1, 2, 111), and the first limiting boss (1, 2, 111) is configured to limit displacement of the elastic component (113) along the radial direction of the input shaft (111), wherein
along the radial direction of the input shaft (111), a radial size of the first limiting boss (1, 2, 111) is less than the radial size of the first limiting platform (1, 111); and
along the axial direction of the input shaft (111), an end surface (5, 112) of the first limiting boss (1, 2, 111) faces the second limiting platform (1, 2, 111, 112), and a distance between the end surface (5, 112) of the first limiting boss (1, 2, 111) and the second limiting platform (1, 2, 111, 112) is less than a distance between the first limiting platform (1, 111) and the second limiting platform (1, 2, 111, 112).

11. The powertrain (110) according to claim 10, wherein the elastic component (113) is the waveform spring (113), and one end of the waveform spring (113) is sleeved on a side surface of the first limiting boss (1, 2, 111), wherein
along the radial direction of the input shaft (111), an inner diameter of the elastic component (113) is greater than or equal to the radial size of the first limiting boss (1, 2, 111); and
along the axial direction of the input shaft (111), the distance between the end surface (5, 112) of the first limiting boss (1, 2, 111) and the second limiting platform (1, 2, 111, 112) is less than the length of the elastic component (113) in the compressed state.

12. The powertrain (110) according to any one of claims 1 to 11, wherein the coupling end of the output shaft (112) comprises a second limiting boss, and the second limiting boss is configured to limit displacement of the elastic component (113) along the radial direction of the output shaft (112), wherein
along the radial direction of the output shaft (112), a radial size of the second limiting boss is less than the radial size of the second limiting platform (1, 2, 111, 112); and
along the axial direction of the output shaft (112), an end surface (5, 112) of the second limiting boss faces the first limiting platform (1, 111), and a distance between the end surface (5, 112) of the second limiting boss and the first limiting platform (1, 111) is less than the distance between the first limiting platform (1, 111) and the second limiting platform (1, 2, 111, 112).

13. The powertrain (110) according to claim 12, wherein the elastic component (113) is the waveform spring (113), and the other end of the waveform spring (113) is sleeved on a side surface of the second limiting boss, wherein
along the radial direction of the input shaft (111), the inner diameter of the elastic component (113) is greater than or equal to the radial size of the second limiting boss; and
along the axial direction of the input shaft (111), the distance between the end surface (5, 112) of the second limiting boss and the first limiting platform (1, 111) is less than the length of the elastic component (113) in the compressed state.

14. An automobile (100), comprising:
a wheel (120) and the powertrain (110) according to claims 1 to 13, wherein
the powertrain (110) is configured to drive the wheel (120) of the automobile (100) to rotate.

## Patentansprüche

1. Antriebsstrang (110), wobei der Antriebsstrang (110) einen Motor, ein Untersetzungsgetriebe und eine elastische Komponente (113) umfasst, das Untersetzungsgetriebe eine Eingangswelle (111) umfasst, der Motor eine Ausgangswelle (112) umfasst, die Eingangswelle (111) koaxial mit der Ausgangswelle (112) gekoppelt ist, ein Kopplungsende der Eingangswelle (111) eine erste Begrenzungsplattform (1, 111) und eine erste Kopplungsfläche (5, 111) umfasst und ein Kopplungsende der Ausgangswelle (112) eine zweite Begrenzungsplattform (1, 2, 111, 112) und eine zweite Kopplungsfläche (3, 112) umfasst, wobei
die erste Kopplungsfläche (5, 111) und die zweite Kopplungsfläche (3, 112) entlang einer radialen Richtung der Eingangswelle (111) einander gegenüberliegend vorgesehen sind und die erste Kopplungsfläche (5, 111) mit der zweiten Kopplungsfläche (3, 112) in Kontakt steht, sodass die Ausgangswelle (112) in einer Getriebeverbindung mit der Eingangswelle (111) steht;
die erste Begrenzungsplattform (1, 111) und die zweite Begrenzungsplattform (1, 2, 111, 112) entlang einer axialen Richtung der Eingangswelle (111) einander gegenüberliegend vorgesehen sind; und
die elastische Komponente (113) zwischen der ersten Begrenzungsplattform (1, 111) und der zweiten Begrenzungsplattform (1, 2, 111, 112) befestigt ist;
**dadurch gekennzeichnet, dass**
eines des Kopplungsendes der Eingangswelle (111) und des Kopplungsendes der Ausgangswelle (112) einen vorstehenden Abschnitt umfasst, das andere des Kopplungsendes der Eingangswelle (111) und des Kopplungsendes der Ausgangswelle (112) einen Nutabschnitt umfasst und der vorstehende Abschnitt in dem Nutabschnitt entlang der axialen Richtung der Eingangswelle (111) oder einer axialen Richtung der Ausgangswelle (112) eingebettet ist, um eine Übertragungsverbindung zu bilden, wobei
entlang der axialen Richtung der Eingangswelle (111) oder der axialen Richtung der Ausgangswelle (112) eine Endfläche (5, 112) des vorstehenden Abschnitts gegenüber einer Bodenfläche des Nutabschnitts vorgesehen ist, eine Seitenfläche des vorstehenden Abschnitts eine der ersten Kopplungsfläche (5, 111) und der zweiten Kopplungsfläche (3, 112) bildet und eine Seitenfläche des Nutabschnitts die andere der ersten Kopplungsfläche (5, 111) und der zweiten Kopplungsfläche (3, 112) bildet.

2. Antriebsstrang (110) nach Anspruch 1, wobei zwei Enden der elastischen Komponente (113) jeweils an der ersten Begrenzungsplattform (1, 111) und der zweiten Begrenzungsplattform (1, 2, 111, 112) anliegen, sodass sich die elastische Komponente (113) in einem zusammengedrückten Zustand befindet, wobei
der zusammengedrückte Zustand der elastischen Komponente (113) einen ersten zusammengedrückten Zustand und einen zweiten zusammengedrückten Zustand umfasst, sich die Eingangswelle (111) und die Ausgangswelle (112) des Motors in Bezug aufeinander entlang der axialen Richtung der Eingangswelle (111) bewegen, sodass die elastische Komponente (113) von dem ersten zusammengedrückten Zustand in den zweiten zusammengedrückten Zustand versetzt wird, und eine Länge der elastischen Komponente (113) in dem zweiten zusammengedrückten Zustand größer als oder kleiner als eine Länge der elastischen Komponente (113) in dem ersten zusammengedrückten Zustand ist.

3. Antriebsstrang (110) nach Anspruch 1, wobei entlang der radialen Richtung der Eingangswelle (111) oder einer radialen Richtung der Ausgangswelle (112) eine radiale Größe des vorstehenden Abschnitts kleiner als eine radiale Größe der ersten Begrenzungsplattform (1, 111) und eine radiale Größe der zweiten Begrenzungsplattform (1, 2, 111, 112) ist, ein Außendurchmesser des Nutabschnitts kleiner als die radiale Größe der ersten Begrenzungsplattform (1, 111) und die radiale Größe der zweiten Begrenzungsplattform (1, 2, 111, 112) ist und die radiale Größe des vorstehenden Abschnitts kleiner als oder gleich einem Innendurchmesser des Nutabschnitts ist.

4. Antriebsstrang (110) nach Anspruch 1, wobei ein Zwischenraum zwischen der Endfläche (5, 112) des vorstehenden Abschnitts und der Bodenfläche des Nutabschnitts größer als eine Länge der elastischen Komponente (113) in dem zusammengedrückten Zustand ist und die Seitenfläche des vorstehenden Abschnitts in einer Spielpassung mit der Seitenfläche des Nutabschnitts steht.

5. Antriebsstrang (110) nach Anspruch 1, wobei das Kopplungsende der Eingangswelle (111) mit dem Kopplungsende der Ausgangswelle (112) unter Verwendung von Keilnuten verbunden und gekoppelt ist, die Seitenfläche des vorstehenden Abschnitts eine äußere Keilnut umfasst und die Seitenfläche des Nutabschnitts eine innere Keilnut umfasst.

6. Antriebsstrang (110) nach Anspruch 1, wobei die elastische Komponente (113) eine Wellenformfeder (113) ist und die Wellenformfeder (113) über das Kopplungsende der Eingangswelle (111) und das Kopplungsende der Ausgangswelle (112) geschoben ist, wobei
entlang der radialen Richtung der Eingangswelle (111) oder einer radialen Richtung der Ausgangswelle (112) ein Innendurchmesser der Wellenformfeder (113) größer als eine radiale Größe des vorstehenden Abschnitts und ein Außendurchmesser des Nutabschnitts ist.

7. Antriebsstrang (110) nach Anspruch 6, wobei entlang der radialen Richtung der Eingangswelle (111) oder der radialen Richtung der Ausgangswelle (112) ein Außendurchmesser der Wellenformfeder (113) kleiner als eine radiale Größe der ersten Begrenzungsplattform (1, 111) und eine radiale Größe der zweiten Begrenzungsplattform (1, 2, 111, 112) ist.

8. Antriebsstrang (110) nach einem der Ansprüche 1 bis 7, wobei die erste Begrenzungsplattform (1, 111) eine erste Befestigungskomponente umfasst, die erste Befestigungskomponente dazu konfiguriert ist, ein Ende der elastischen Komponente (113) zu befestigen, und die zweite Begrenzungsplattform (1, 2, 111, 112) dazu konfiguriert ist, das andere Ende der elastischen Komponente (113) zu befestigen; oder
die zweite Begrenzungsplattform (1, 2, 111, 112) eine zweite Befestigungskomponente umfasst, die erste Begrenzungsplattform (1, 111) dazu konfiguriert ist, ein Ende der elastischen Komponente (113) zu befestigen, und die zweite Befestigungskomponente dazu konfiguriert ist, das andere Ende der elastischen Komponente (113) zu befestigen.

9. Antriebsstrang (110) nach einem der Ansprüche 1 bis 8, wobei entlang der radialen Richtung der Eingangswelle (111) die elastische Komponente (113) in einem Zwischenraum mit der ersten Kopplungsfläche (5, 111) oder der zweiten Kopplungsfläche (3, 112) vorgesehen ist.

10. Antriebsstrang (110) nach einem der Ansprüche 1 bis 9, wobei das Kopplungsende der Eingangswelle (111) einen ersten Begrenzungsvorsprung (1, 2, 111) umfasst und der erste Begrenzungsvorsprung (1, 2, 111) dazu konfiguriert ist, eine Verschiebung der elastischen Komponente (113) entlang der radialen Richtung der Eingangswelle (111) zu begrenzen, wobei entlang der radialen Richtung der Eingangswelle (111) eine radiale Größe des ersten Begrenzungsvorsprungs (1, 2, 111) kleiner als die radiale Größe der ersten Begrenzungsplattform (1, 111) ist; und
entlang der axialen Richtung der Eingangswelle (111) eine Endfläche (5, 112) des ersten Begrenzungsvorsprungs (1, 2, 111) der zweiten Begrenzungsplattform (1, 2, 111, 112) zugewandt ist und ein Abstand zwischen der Endfläche (5, 112) des ersten Begrenzungsvorsprungs (1, 2, 111) und der zweiten Begrenzungsplattform (1, 2, 111, 112) kleiner als ein Abstand zwischen der ersten Begrenzungsplattform (1, 111) und der zweiten Begrenzungsplattform (1, 2, 111, 112) ist.

11. Antriebsstrang (110) nach Anspruch 10, wobei die elastische Komponente (113) die Wellenformfeder (113) ist und ein Ende der Wellenformfeder (113) über eine Seitenfläche des ersten Begrenzungsvorsprungs (1, 2, 111) geschoben ist, wobei entlang der radialen Richtung der Eingangswelle (111) ein Innendurchmesser der elastischen Komponente (113) größer als oder gleich der radialen Größe des ersten Begrenzungsvorsprungs (1, 2, 111) ist; und
entlang der axialen Richtung der Eingangswelle (111) der Abstand zwischen der Endfläche (5, 112) des ersten Begrenzungsvorsprungs (1, 2, 111) und der zweiten Begrenzungsplattform (1, 2, 111, 112) kleiner als die Länge der elastischen Komponente (113) in dem zusammengedrückten Zustand ist.

12. Antriebsstrang (110) nach einem der Ansprüche 1 bis 11, wobei das Kopplungsende der Ausgangswelle (112) einen zweiten Begrenzungsvorsprung umfasst und der zweite Begrenzungsvorsprung dazu konfiguriert ist, eine Verschiebung der elastischen Komponente (113) entlang der radialen Richtung der Ausgangswelle (112) zu begrenzen, wobei
entlang der radialen Richtung der Ausgangswelle (112) eine radiale Größe des zweiten Begrenzungsvorsprungs kleiner als die radiale Größe der zweiten Begrenzungsplattform (1, 2, 111, 112) ist; und
entlang der axialen Richtung der Ausgangswelle (112) eine Endfläche (5, 112) des zweiten Begrenzungsvorsprungs der ersten Begrenzungsplattform (1, 111) zugewandt ist und ein Abstand zwischen der Endfläche (5, 112) des zweiten Begrenzungsvorsprungs und der ersten Begrenzungsplattform (1, 111) kleiner als der Abstand zwischen der ersten Begrenzungsplattform (1, 111) und der zweiten Begrenzungsplattform (1, 2, 111, 112) ist.

13. Antriebsstrang (110) nach Anspruch 12, wobei die elastische Komponente (113) die Wellenformfeder (113) ist und das andere Ende der Wellenformfeder (113) über eine Seitenfläche des zweiten Begrenzungsvorsprungs geschoben ist, wobei
entlang der radialen Richtung der Eingangswelle (111) der Innendurchmesser der elastischen Komponente (113) größer als oder gleich der radialen Größe des zweiten Begrenzungsvorsprungs ist; und
entlang der axialen Richtung der Eingangswelle (111) der Abstand zwischen der Endfläche (5, 112) des zweiten Begrenzungsvorsprungs und der ersten Begrenzungsplattform (1, 111) kleiner als die Länge der elastischen Komponente (113) in dem zusammengedrückten Zustand ist.

14. Kraftfahrzeug (100), umfassend:
ein Rad (120) und den Antriebsstrang (110) nach einem der Ansprüche 1 bis 13, wobei
der Antriebsstrang (110) dazu konfiguriert ist, das Rad (120) des Kraftfahrzeugs (100) dazu anzutreiben, sich zu drehen.

## Revendications

1. Un ensemble d'alimentation (110), dans lequel l'ensemble d'alimentation (110) comprend un moteur, un réducteur et un composant élastique (113), le réducteur comprend un arbre d'entrée (111), le moteur comprend un arbre de sortie (112), l'arbre d'entrée (111) est accouplé coaxialement à l'arbre de sortie (112), une extrémité d'accouplement de l'arbre d'entrée (111) comprend une première plate-forme de butée (1, 111) et une première surface d'accouplement (5, 111), et une extrémité d'accouplement de l'arbre de sortie (112) comprend une seconde plate-forme de butée (1, 2, 111, 112) et une seconde surface d'accouplement (3, 112), dans lequel :
la première surface d'accouplement (5, 111) et la seconde surface d'accouplement (3, 112) sont disposées l'une en face de l'autre selon une direction radiale de l'arbre d'entrée (111), et la première surface d'accouplement (5, 111) est en contact avec la seconde surface d'accouplement (3, 112), de sorte que l'arbre de sortie (112) est en connexion de transmission avec l'arbre d'entrée (111) ;
la première plate-forme de butée (1, 111) et la seconde plate-forme de butée (1, 2, 111, 112) sont disposées l'une en face de l'autre selon une direction axiale de l'arbre d'entrée (111) ; et
le composant élastique (113) est fixé entre la première plate-forme de butée (1, 111) et la seconde plate-forme de butée (1, 2, 111, 112) ;
**caractérisé en ce que**
l'une de l'extrémité d'accouplement de l'arbre d'entrée (111) et de l'extrémité d'accouplement de l'arbre de sortie (112) comprend une partie saillante, l'autre de l'extrémité d'accouplement de l'arbre d'entrée (111) et de l'extrémité d'accouplement de l'arbre de sortie (112) comprend une partie en forme de rainure, et la partie saillante est insérée dans la partie en forme de rainure selon la direction axiale de l'arbre d'entrée (111) ou une direction axiale de l'arbre de sortie (112) afin de former une connexion de transmission, dans lequel
dans la direction axiale de l'arbre d'entrée (111) ou de l'arbre de sortie (112), une surface d'extrémité (5, 112) de la partie saillante est disposée en face d'une surface de fond de la partie en forme de rainure, une surface latérale de la partie saillante formant l'une de la première surface d'accouplement (5, 111) et de la seconde surface d'accouplement (3, 112), et une surface latérale de la partie en forme de rainure formant l'autre de la première surface d'accouplement (5, 111) et de la seconde surface d'accouplement (3, 112).

2. L'ensemble d'alimentation (110) selon la revendication 1, dans lequel deux extrémités du composant élastique (113) sont respectivement en appui contre la première plate-forme de butée (1, 111) et la seconde plate-forme de butée (1, 2, 111, 112), de sorte que le composant élastique (113) est dans un état comprimé, dans lequel
l'état comprimé du composant élastique (113) comprend un premier état comprimé et un second état comprimé, l'arbre d'entrée (111) et l'arbre de sortie (112) du moteur se déplaçant l'un par rapport à l'autre dans la direction axiale de l'arbre d'entrée (111), de sorte que le composant élastique (113) passe du premier état comprimé au second état comprimé, et une longueur du composant élastique (113) dans le second état comprimé est supérieure ou inférieure à une longueur du composant élastique (113) dans le premier état comprimé.

3. L'ensemble d'alimentation (110) selon la revendication 1, dans lequel, dans la direction radiale de l'arbre d'entrée (111) ou une direction radiale de l'arbre de sortie (112), une dimension radiale de la partie saillante est inférieure à une dimension radiale de la première plate-forme de butée (1, 111) et à une dimension radiale de la seconde plate-forme de butée (1, 2, 111, 112), un diamètre extérieur de la partie en forme de rainure est inférieur à la dimension radiale de la première plate-forme de butée (1, 111) et à la dimension radiale de la seconde plate-forme de butée (1, 2, 111, 112), et la dimension radiale de la partie saillante est inférieure ou égale à un diamètre intérieur de la partie en forme de rainure.

4. L'ensemble d'alimentation (110) selon la revendication 1, dans lequel un interstice entre la surface d'extrémité (5, 112) de la partie saillante et la surface de fond de la partie en forme de rainure est supérieur à une longueur du composant élastique (113) dans l'état comprimé, et la surface latérale de la partie saillante est en ajustement libre avec la surface latérale de la partie en forme de rainure.

5. L'ensemble d'alimentation (110) selon la revendication 1, dans lequel l'extrémité d'accouplement de l'arbre d'entrée (111) est reliée et accouplée à l'extrémité d'accouplement de l'arbre de sortie (112) à l'aide de cannelures, la surface latérale de la partie saillante comprenant une cannelure externe, et la surface latérale de la partie en forme de rainure comprenant une cannelure interne.

6. L'ensemble d'alimentation (110) selon la revendication 1, dans lequel le composant élastique (113) est un ressort ondulé (113), et le ressort ondulé (113) est monté autour de l'extrémité d'accouplement de l'arbre d'entrée (111) et de l'extrémité d'accouplement de l'arbre de sortie (112), dans lequel
dans la direction radiale de l'arbre d'entrée (111) ou une direction radiale de l'arbre de sortie (112), un diamètre intérieur du ressort ondulé (113) est supérieur à une dimension radiale de la partie saillante et à un diamètre extérieur de la partie en forme de rainure.

7. L'ensemble d'alimentation (110) selon la revendication 6, dans lequel, dans la direction radiale de l'arbre d'entrée (111) ou la direction radiale de l'arbre de sortie (112), un diamètre extérieur du ressort ondulé (113) est inférieur à une dimension radiale de la première plate-forme de butée (1, 111) et à une dimension radiale de la seconde plate-forme de butée (1, 2, 111, 112).

8. L'ensemble d'alimentation (110) selon l'une quelconque des revendications 1 à 7, dans lequel la première plate-forme de butée (1, 111) comprend un premier élément de fixation, le premier élément de fixation étant configuré pour fixer une extrémité du composant élastique (113), et la seconde plate-forme de butée (1, 2, 111, 112) étant configurée pour fixer l'autre extrémité du composant élastique (113) ; ou
la seconde plate-forme de butée (1, 2, 111, 112) comprend un second élément de fixation, la première plate-forme de butée (1, 111) étant configurée pour fixer une extrémité du composant élastique (113), et le second élément de fixation étant configuré pour fixer l'autre extrémité du composant élastique (113).

9. L'ensemble d'alimentation (110) selon l'une quelconque des revendications 1 à 8, dans lequel, dans la direction radiale de l'arbre d'entrée (111), le composant élastique (113) est disposé dans un interstice avec la première surface d'accouplement (5, 111) ou la seconde surface d'accouplement (3, 112).

10. L'ensemble d'alimentation (110) selon l'une quelconque des revendications 1 à 9, dans lequel l'extrémité d'accouplement de l'arbre d'entrée (111) comprend un premier bossage de butée (1, 2, 111), et le premier bossage de butée (1, 2, 111) est configuré pour limiter le déplacement du composant élastique (113) dans la direction radiale de l'arbre d'entrée (111), dans lequel
dans la direction radiale de l'arbre d'entrée (111), une dimension radiale du premier bossage de butée (1, 2, 111) est inférieure à la dimension radiale de la première plate-forme de butée (1, 111) ; et
dans la direction axiale de l'arbre d'entrée (111), une surface d'extrémité (5, 112) du premier bossage de butée (1, 2, 111) fait face à la seconde plate-forme de butée (1, 2, 111, 112), et une distance entre la surface d'extrémité (5, 112) du premier bossage de butée (1, 2, 111) et la seconde plate-forme de butée (1, 2, 111, 112) est inférieure à une distance entre la première plate-forme de butée (1, 111) et la seconde plate-forme de butée (1, 2, 111, 112).

11. L'ensemble d'alimentation (110) selon la revendication 10, dans lequel le composant élastique (113) est le ressort ondulé (113), et une extrémité du ressort ondulé (113) est montée autour d'une surface latérale du premier bossage de butée (1, 2, 111), dans lequel
dans la direction radiale de l'arbre d'entrée (111), un diamètre intérieur du composant élastique (113) est supérieur ou égal à la dimension radiale du premier bossage de butée (1, 2, 111) ; et
dans la direction axiale de l'arbre d'entrée (111), la distance entre la surface d'extrémité (5, 112) du premier bossage de butée (1, 2, 111) et la seconde plate-forme de butée (1, 2, 111, 112) est inférieure à la longueur du composant élastique (113) dans l'état comprimé.

12. L'ensemble d'alimentation (110) selon l'une quelconque des revendications 1 à 11, dans lequel l'extrémité d'accouplement de l'arbre de sortie (112) comprend un second bossage de butée, et le second bossage de butée est configuré pour limiter le déplacement du composant élastique (113) dans la direction radiale de l'arbre de sortie (112), dans lequel
dans la direction radiale de l'arbre de sortie (112), une dimension radiale du second bossage de butée est inférieure à la dimension radiale de la seconde plate-forme de butée (1, 2, 111, 112) ; et
dans la direction axiale de l'arbre de sortie (112), une surface d'extrémité (5, 112) du second bossage de butée fait face à la première plate-forme de butée (1, 111), et une distance entre la surface d'extrémité (5, 112) du second bossage de butée et la première plate-forme de butée (1, 111) est inférieure à la distance entre la première plate-forme de butée (1, 111) et la seconde plate-forme de butée (1, 2, 111, 112).

13. L'ensemble d'alimentation (110) selon la revendication 12, dans lequel le composant élastique (113) est le ressort ondulé (113), et l'autre extrémité du ressort ondulé (113) est montée autour d'une surface latérale du second bossage de butée, dans lequel
dans la direction radiale de l'arbre d'entrée (111), le diamètre intérieur du composant élastique (113) est supérieur ou égal à la dimension radiale du second bossage de butée ; et
dans la direction axiale de l'arbre d'entrée (111), la distance entre la surface d'extrémité (5, 112) du second bossage de butée et la première plate-forme de butée (1, 111) est inférieure à la longueur du composant élastique (113) dans l'état comprimé.

14. Un véhicule automobile (100), comprenant :
une roue (120) et l'ensemble d'alimentation (110) selon les revendications 1 à 13, dans lequel
l'ensemble d'alimentation (110) est configuré pour entraîner la rotation de la roue (120) du véhicule automobile (100).
